# EUROPEAN PATENT APPLICATION

(11) **EP 4 793 039 A1**
(43) Date of publication of application: **19.08.2026**
(21) Application number: 24890791.7
(22) Date of filing: 15.11.2024
(51) Int. Cl.: B32B 17/10, B32B 3/08, B32B 3/26, B32B 17/00

(54) **LAMINATED GLASS ALLOWING FOR INTERNAL INSTALLATION OF LASER RADAR, AND VEHICLE COMPRISING LAMINATED GLASS**

(30) Priority: 16.11.2023 CN 202311529868
(71) Applicant: Fuyao Glass Industry Group Co., Ltd., Fuqing, Fujian 350300 (CN)
(72) Inventor: CHEN, Bingjing, Fuzhou, Fujian 350300 (CN)
(74) Representative: Patentanwälte Olbricht Buchhold Keulertz
(86) International application number: PCT/CN2024/132172
(87) International publication number: WO 2025/103437

(57) **Abstract**

Disclosed in the present invention are laminated glass allowing for the internal installation of a laser radar, and a vehicle comprising laminated glass. The laminated glass comprises an outer glass pane, a thermoplastic intermediate layer and an inner glass pane; at least a part of the edge of the outer glass pane extends beyond the inner glass pane to form a single-layered glass region, and the overlapping part corresponds to a double-layered glass region; and the transmittance of the outer glass pane in the infrared band of 800-2,100 nm is 75% to 95%. An infrared anti-reflection film can be further provided in an area covered by an optical path of the laser radar to improve the transmittance of the laser radar in the infrared band of 800-2,100 nm.

## Description

### CROSS-REFERENCE TO RELATED APPLICATIONS

The present application claims priority to Chinese Patent Application No. 202311529868.6, filed with the State Intellectual Property Office of China on November 16, 2023 and entitled "LAMINATED GLASS ALLOWING FOR INTERNAL INSTALLATION OF LASER RADAR, AND VEHICLE COMPRISING LAMINATED GLASS", the contents of which is incorporated herein by reference in its entirety.

### TECHNICAL FIELD

The present invention relates to the field of glass products, and in particular, to a laminated glass allowing for internal installation of a laser radar and a vehicle comprising laminated glass.

### BACKGROUND ART

When a laser radar is installed on a front windshield, the laminated front windshield causes reduction of the transmittance in the infrared band of 800-2,100 nm. An existing solution involves adding an anti-reflection film or using ultra-clear glass on basis of the thickness of a conventional laminated glass assembly (2.1/0.76/2.1).

The use of anti-reflection films or ultra-clear glass can moderately increase the transmittance in the infrared band of 800-2,100 nm. However, for a laser radar, higher transmission enables capture of more point clouds and yields more precise imagery. Consequently, the industry expects to further improve the transmittance of the front windshield in the infrared band of 800-2,100 nm for the laser radar.

### SUMMARY OF THE INVENTION

One object of the present invention is to provide a laminated glass allowing for internal installation of a laser radar, which achieves the effect of transmittances in different nanometer bands on the same glass window.

Another object of the present invention is to provide a vehicle comprising the laminated glass.

To achieve the above objects, the present invention adopts the following technical solutions.

An aspect of the present invention provides a laminated glass allowing for internal installation of a laser radar, wherein the laminated glass comprises an outer glass pane, a thermoplastic intermediate layer and an inner glass pane;
the outer glass pane has a first surface and a second surface opposite to each other; the inner glass pane has a third surface and a fourth surface opposite to each other;
at least a part of the edge of the outer glass pane extends beyond the inner glass pane, wherein the extending part forms a single-layered glass region and the overlapping part corresponds to a double-layered glass region;
the thermoplastic intermediate layer is interposed between the outer glass pane and the inner glass pane in the double-layered glass region, for bonding the second surface and the third surface;
the laser radar is installed on the second surface of the outer glass pane in the single-layered glass region; and
the transmittance of the outer glass pane in the infrared band of 800-2,100 nm is 75% to 95%.

In the laminated glass according to the present invention, the outer glass pane and the inner glass pane are designed with a staggered structure. The outer glass pane extends beyond the inner glass pane to form a single-layered glass region, and a laser radar is installed on the inner side of the single-layered glass region (the second surface of the outer glass pane). The single-layered glass region is not provided with a thermoplastic intermediate layer, so the optical path of the laser radar only needs to pass through one layer of the outer glass pane, resulting in a higher transmittance than passing through conventional double-layered glass. In addition, the absorption of the infrared band of 800-2,100 nm for the laser radar by the thermoplastic intermediate layer can be avoided, enabling the laser radar to capture more point clouds. Moreover, the staggered structure can also provide an in-vehicle space for the internal installation of the laser radar within the windshield. For example, the thickness of the inner glass pane is 1.1 mm, and the thickness of the thermoplastic intermediate layer is 0.76 mm, thereby saving a length of 1.1 + 0.76 = 1.86 mm.

In the laminated glass according to the present invention, preferably, an infrared anti-reflection film is provided on the second surface in the region covered by the optical path of the laser radar.

In the laminated glass according to the present invention, preferably, the infrared anti-reflection film comprises at least one stacked structure in which high-refractive-index layers and low-refractive-index layers are alternately arranged in this order; and within the same stacked structure, the refractive index of the high-refractive-index layer for the infrared band of 800-2,100 nm is higher than that of the low-refractive-index layer for the infrared band of 800-2,100 nm.

The material of the high-refractive-index layer comprises at least one of Si, NbOₓ (niobium oxide), SiNₓ (silicon nitride), ZrOₓ (zirconium oxide), TiOₓ (titanium oxide), TiNₓ (titanium nitride), MoOₓ (molybdenum oxide), TaOₓ (tantalum oxide) and HfOₓ (hafnium oxide). The material of the low-refractive-index layer comprises at least one of SiOₓ (silicon oxide), MgFₓ (magnesium fluoride), AlOₓ (aluminum oxide), WOₓ (tungsten oxide), YFₓ (yttrium fluoride) and BaFₓ (barium fluoride). Under the same conditions, the transmittance of the region of the outer glass pane provided with the infrared anti-reflection film in the infrared band of 800-2,100 nm can be increased by at least 3%.

In the laminated glass according to the present invention, preferably, an infrared reflection film is provided on the second surface of the outer glass pane or the third surface of the inner glass pane. The infrared reflection film does not cover the region covered by the optical path of the laser radar. More preferably, the infrared reflection film is located in the double-layered glass region.

In the laminated glass according to the present invention, preferably, the infrared reflection film has an effect of reflecting light in the infrared band of 780-2,500 nm. The transmittance of the region of the laminated glass provided with the infrared reflection film in the infrared band of 780-2,500 nm is less than or equal to 45%.

The arrangement of the infrared reflection film may not only effectively block solar energy from passing through the laminated glass, but also avoid the reflection of the light in the infrared band for the laser radar by the film layer.

In the laminated glass according to the present invention, preferably, the infrared reflection film comprises at least one of a metal layer, a metal alloy layer, and a metal oxide layer. The material of the metal layer is at least one selected from gold (Au), silver (Ag), copper (Cu), aluminum (Al), and molybdenum (Mo). The material of the metal alloy layer is at least one selected from silver alloys. The silver alloy layer contains metallic silver and a first doped metal element which is at least one selected from copper (Cu), gold (Au), palladium (Pd), tin (Sn), zinc (Zn), lead (Pb) and nickel (Ni) elements. The material of the metal oxide layer is at least one selected from indium tin oxide, fluorine-doped tin dioxide, aluminum-doped tin dioxide, gallium-doped tin dioxide, boron-doped tin dioxide, tin zinc oxide and antimony-doped tin oxide.

For example, when the infrared reflection film comprises a silver layer or a silver alloy layer, the silver layer or the silver alloy layer is located between at least two dielectric layers, and the dielectric layers contain at least one of zinc oxide, tin oxide, indium oxide, titanium oxide, silicon oxide, aluminum oxide, silicon nitride, silicon carbide, aluminum nitride and titanium metal.

In the laminated glass according to the present invention, preferably, the double-layered glass region of the laminated glass further comprises an electrical connection element, which is electrically connected to the infrared reflection film and is used to allow the infrared reflection film to generate heat when energized, thereby achieving a defrosting and defogging function.

More preferably, the distance between the outer edge of the electrical connection element and the outer edge of the inner glass pane is in the range of 0 to 30 mm.

The laminated glass according to the present invention may be specifically used as a front windshield with an internally installed laser radar, where at least a part of the edge of the outer glass pane extends beyond the inner glass pane to form the single-layered glass region. This extension means that the outer glass pane is larger in size than the inner glass pane, and the extending part may be the entire circumference or a certain part of the edge. Preferably, at least a part of one side edge of the outer glass pane extends beyond the inner glass pane to form the single-layered glass region. The extending part may be the entire side edge of the outer glass pane or a part of the side edge. When the laminated glass according to the present invention is used as a front windshield, the side edge is preferably located at the top edge of the glass.

In the laminated glass according to the present invention, in the single-layered glass region and in the direction from the edge of the outer glass pane to the edge of the inner glass pane, the distance from the edge of the outer glass pane to the edge of the inner glass pane is d; the distance from the edge of the outer glass pane to the outer edge of the region covered by the optical path of the laser radar is d1; the distance from the outer edge to the inner edge of the optical path of the laser radar is d2; and the distance from the inner edge of the region covered by the optical path of the laser radar to the edge of the inner glass pane is d3. Preferably, d1 is 10-150 mm, d2 is 30-180 mm, d3 is 0-50 mm, and d = d1 + d2 + d3.

When d3 is 0, the light-transmitting functional region is adjacent to the edge of the inner glass pane. When d3 is not 0, the light-transmitting functional region is not in contact with the edge of the inner glass pane, which is more preferable.

In the laminated glass according to the present invention, preferably, the horizontal length saving amount of the laser radar installed in the single-layered glass region is a, and a = b/cosθ, wherein b = total thickness of the laminated glass - thickness of the outer glass pane, and θ = 90° - installation angle of the laminated glass.

In the laminated glass according to the present invention, preferably, the area where the optical path of the laser radar intersects with the single-layered glass region is S1; if the laser radar is installed in the double-layered glass region, the area where the optical path of the laser radar intersects with the double-layered glass region is S2, and S1 < S2.

In the laminated glass according to the present invention, preferably, a first masking layer is provided on the second surface of the outer glass pane; the first masking layer covers at least the transition part between the single-layered glass region and the double-layered glass region, and does not cover the region covered by the optical path of the laser radar.

In the laminated glass according to the present invention, preferably, a second masking layer is provided on the third surface or the fourth surface of the inner glass pane. The second masking layer is generally provided in a full circumference configuration, though this may vary based on specific requirements. The masking layers are used to shield circuits, connecting accessories and the like at the edge of the laminated glass, for improving the appearance, protecting interior components and enhancing localized adhesion.

In the laminated glass according to the present invention, preferably, the material of the first and the second masking layer is ceramic ink or UV ink.

In the laminated glass according to the present invention, preferably, the visible light transmittance of the first or the second masking layer is ≤ 1.5%, and the UV transmittance thereof is ≤ 0.05%.

In the laminated glass according to the present invention, preferably, both the outer glass pane and the inner glass pane are subjected to hot bending molding treatment at 500°C or higher.

In the laminated glass according to the present invention, preferably, the outer glass pane is a transparent glass with a transmittance of 75-85% in the infrared band of 800-2,100 nm, or an ultra-clear glass with a transmittance of 85-95% in the infrared band of 800-2,100 nm; more preferably, the outer glass pane is an ultra-clear glass with a transmittance of 85-95% in the infrared band of 800-2,100 nm.

In the laminated glass according to the present invention, preferably, the inner glass pane is selected from a transparent glass with a visible light transmittance of 85-93%, a green glass with a visible light transmittance of 73-88%, and a solar green glass with a visible light transmittance of 70-85.5%.

In the laminated glass according to the present invention, preferably, the thickness of the outer glass pane is 3.2-5.0 mm, and the thickness of the inner glass pane is 0.5-1.8 mm. For the outer glass pane, plating an infrared reflection layer can somewhat weaken the glass surface, thereby enabling the laminated glass to meet the requirements for the front windshield glass in terms of pedestrian collision.

In the laminated glass according to the present invention, the inner glass pane is tempered glass or non-tempered glass. When the inner glass pane is non-tempered glass, the thickness of the inner glass pane is 1.6-1.8 mm. When the inner glass pane is tempered glass subjected to special chemical treatment, the thickness of the inner glass pane is 0.5-1.5 mm, more preferably 0.5-1.3 mm, and further preferably 1.1 mm. The tempered glass contains different metal oxides such as silicon dioxide, aluminum oxide, sodium oxide and magnesium oxide.

Since the inner glass pane is thinned, under the same process conditions (semi-tempering, thermal strengthening, and the like), in order to ensure the rigidity of the entire laminated glass assembly, the thickness of the outer glass pane is preferably greater than that of the inner glass pane according to the present invention. Preferably, the thickness of the outer glass pane is 3.2-5.0 mm, such as 3.2 mm, 3.5 mm, 4.0 mm, 4.5 mm or 5.0 mm, more preferably 3.2-4.0 mm, such as 3.2 mm, 3.5 mm or 4.0 mm, and further preferably 3.5 mm.

In addition, in order to ensure that the rigidity of the entire laminated glass assembly is equivalent to that of a single piece of tempered glass, the thickness of the outer glass pane is preferably consistent with that of a single piece of tempered glass according to the present invention. That is, preferably, the rigidity of the laminated glass is equivalent to that of a single piece of tempered glass with the same thickness as the outer glass pane in the laminated glass.

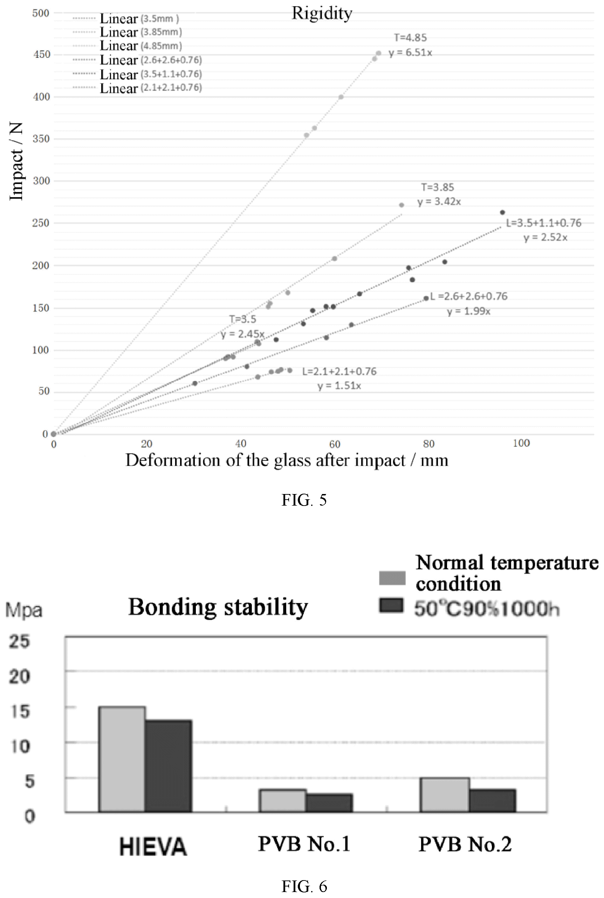

For example, as shown in Figure 5, by configuring a reasonable glass assembly, the present invention enables the laminated glass assembly consisting of a 3.5 mm outer glass pane, a 1.1 mm inner glass pane and a 0.76 mm intermediate layer to have a strength equivalent to that of a 3.5 mm single piece of tempered glass, which is superior to that of a conventional laminated glass assembly consisting of a 2.6 mm outer glass pane, a 2.6 mm inner glass pane and a 0.76 mm intermediate layer and that of a conventional laminated glass assembly consisting of a 2.1 mm outer glass pane, a 2.1 mm inner glass pane and a 0.76 mm intermediate layer.

In the laminated glass according to the present invention, the thermoplastic intermediate layer is interposed between the outer glass pane and the inner glass pane in the double-layered glass region, and it is used for bonding the second and the third surfaces of this part. The thermoplastic intermediate layer may be of a single layer or two or more layers. The thermoplastic intermediate layer may also have other functions. For example, the thermoplastic intermediate layer may also comprise at least two layers, one of which has a higher plasticizer content to provide sound insulation, or one of which is wedge-shaped so as to enable a head-up display (HUD) and the like.

In the laminated glass according to the present invention, preferably, the thickness of the thermoplastic intermediate layer is 0.3-2.3 mm, such as 0.38 mm, 0.51 mm, 0.76 mm, 1.9 mm (three layers, with thicknesses of 0.76 mm, 0.38 mm and 0.76 mm respectively) or 1.52 mm (three layers, with thicknesses of 0.76 mm, 0.38 mm and 0.38 mm respectively), more preferably 0.38 mm or 0.76 mm, and further preferably 0.76 mm.

In the laminated glass according to the present invention, preferably, the material of the thermoplastic intermediate layer is selected from polycarbonate (PC), polyvinyl chloride (PVC), polyvinyl butyral (PVB), ethylene vinyl acetate (EVA), polyacrylate (PA), polymethyl methacrylate (PMMA), polyurethane (PUR), ionomer film (SGP), and the like, more preferably polyvinyl butyral (PVB) with a visible light transmittance of >70%.

Although thermoplastic intermediate layers of different materials exhibit varying absorption rates for the infrared band of 800-2,100 nm, the present invention, in which the outer glass pane and the inner glass pane adopt a staggered structure and no thermoplastic intermediate layer is incorporated in the single-layered glass region, can avoid the absorption of the infrared band of 800-2,100 nm by the thermoplastic intermediate layer.

In the laminated glass according to the present invention, the thermoplastic intermediate layer may also be a special material with rigid functionality. Preferably, the thermoplastic intermediate layer is a HiR film sheet or an EVA film sheet with rigid functionality.

The rigidity of the HiR film sheet is 40-70% higher than that of conventional film sheets. As the outer glass pane and the inner glass pane become thinner, the overall rigidity of the glass assembly increases significantly. High-strength EVA film sheets contain 5% to 40% vinyl acetate (VA), offering high transparency, excellent flexibility, superior impact resistance, good filler compatibility and reliable heat-sealing properties. These film sheets are primarily thermosetting, utilizing crosslinkable resins that undergo a series of crosslinking reactions triggered by free radicals generated through the high-temperature decomposition of crosslinking agents (peroxides). This process transforms the linear structure of EVA molecules into a crosslinked network structure. High-strength film sheets exhibit adhesion 3 to 4 times greater than that of standard film sheets. Under same conditions, high-strength film sheets demonstrate superior sound insulation performances. Within the sound frequency range of 1000-3000 Hz, which is the most sensitive to the human ear, high-strength film sheets achieve significantly higher sound transmission loss values than standard film sheets.

The laminated glass according to the present invention is designed with a staggered structure, where at least a part of the edge of the outer glass pane extends beyond the inner glass pane to form a single-layered glass region, and a laser radar is installed on the inner side of the single-layered glass region. The single-layered glass region is not provided with a thermoplastic intermediate layer, so the optical path of the laser radar only needs to pass through one layer of the outer glass pane, resulting in a higher transmittance than passing through a conventional double-layered glass. In addition, the absorption of the infrared band of 800-2,100 nm for the laser radar by the thermoplastic intermediate layer can be avoided, enabling the laser radar to capture more point clouds. Moreover, the staggered structure can also provide an in-vehicle space for internal installation of the laser radar within the windshield. The arrangement of an infrared anti-reflection film in the region covered by the optical path of the laser radar can further improve the transmittance of the infrared band of 800-2,100 nm for the laser radar. An infrared reflection film may be further provided in the double-layered glass region, which may not only provide thermal insulation, but also avoid reflection of the infrared band of 800-2,100 nm for the laser radar. Further, the present invention addresses the strength of the laminated glass assembly by optimizing the thickness combination of the outer glass pane and the inner glass pane. For the thermoplastic intermediate layer, a specialized material with rigid functionality is preferred to further enhance rigidity, sound insulation and other properties.

In another aspect, the present invention provides a vehicle comprising any laminated glass as described above and a laser radar installed on the laminated glass.

### BRIEF DESCRIPTION OF THE DRAWINGS

Figure 1 shows a cross-sectional schematic diagram of a laminated glass allowing for internal installation of a laser radar in a preferred embodiment of the present invention.
Figure 2 shows a front view of the laminated glass in a preferred embodiment of the present invention.
Figure 3 shows a cross-sectional schematic diagram of a laminated glass allowing for internal installation of a laser radar in another preferred embodiment.
Figure 4 shows a schematic comparison of the installation of laser radars according to the present invention and a conventional technology.
Figure 5 shows a scatter plot of deformation of various laminated glass assemblies after impact.
Figure 6 shows a comparison of the bonding performances between a modified EVA and a standard PVB film sheet.
Figure 7 shows a comparison of the sound transmission losses for laminated glasses formed by a modified EVA and a standard PVB film sheet, respectively.

Description of reference numerals:
1 - outer glass pane, 11 - first surface, 12 - second surface;
2 - thermoplastic intermediate layer;
3 - inner glass pane, 31 - third surface, 32 - fourth surface;
41 - first masking layer, 42 - second masking layer;
5 - infrared reflection film;
6 - infrared anti-reflection film;
7 - laser radar;
8 - position of top edge bus bar;
9 - bracket.

### DETAILED DESCRIPTION OF EMBODIMENTS

In order to illustrate the present invention more clearly, the invention is further described below in connection with preferred embodiments. It should be understood by those skilled in the art that the following specific descriptions are illustration rather than limitation and should not be used to limit the scope of the present invention.

The laminated glass according to the present invention is designed with a staggered structure of the outer and inner glass panes. The outer glass pane extends beyond the inner glass pane to form a single-layered glass region, and a laser radar is installed on the inner side of the single-layered glass region. The single-layered glass region is not provided with a thermoplastic intermediate layer, so the optical path of the laser radar only needs to pass through one layer of the outer glass pane, resulting in a higher transmittance than passing through a conventional double-layered glass. In addition, the absorption of the infrared band of 800-2,100 nm for the laser radar by the thermoplastic intermediate layer can be avoided, enabling the laser radar to capture more point clouds. Moreover, this staggered structure can also provide in-vehicle space for the laser radar to be built into the windshield. The arrangement of an infrared anti-reflection film in the region covered by the optical path of the laser radar can further improve the transmittance of the infrared band of 800-2,100 nm for the laser radar. Through the design of staggered structure and the use of different materials, the present invention achieves the effect of transmittances in different nanometer bands on the same glass window.

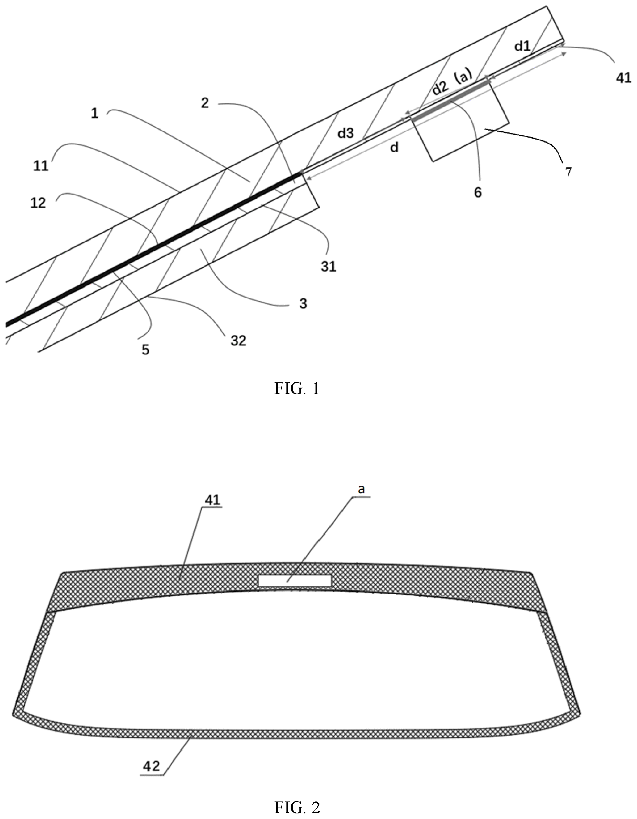

The present invention provides a laminated glass allowing for internal installation of a laser radar. As shown in Figure 1, the laminated glass comprises an outer glass pane 1, a thermoplastic intermediate layer 2 and an inner glass pane 3.

The outer glass pane 1 has a first surface 11 and a second surface 12 opposite to each other. The inner glass pane 3 has a third surface 31 and a fourth surface 32 opposite to each other.

At least a part of the edge of the outer glass pane 1 extends beyond the inner glass pane 3, wherein the extending part forms a single-layered glass region, and the overlapping part corresponds to a double-layered glass region. The laser radar 7 is installed on the second surface 12 of the outer glass pane 1 of the single-layered glass region. The transmittance of the outer glass pane 1 in the infrared band of 800-2,100 nm is 75% to 95%.

In the laminated glass according to the present invention, the outer glass pane and the inner glass pane are designed with a staggered structure. The outer glass pane 1 extends beyond the inner glass pane 3 to form a single-layered glass region, and a laser radar is installed on the inner side of the single-layered glass region (the second surface 12 of the outer glass pane 1). The single-layered glass region is not provided with a thermoplastic intermediate layer 2, so the optical path of the laser radar only needs to pass through one layer of the outer glass pane 1, resulting in a higher transmittance than passing through conventional double-layered glass. In addition, the absorption of the infrared band of 800-2,100 nm for the laser radar by the thermoplastic intermediate layer 2 can be avoided, enabling the laser radar to capture more point clouds. Moreover, the staggered structure can also provide an in-vehicle space for the internal installation of the laser radar within the windshield. For example, the thickness of the inner glass pane is 1.1 mm, and the thickness of the thermoplastic intermediate layer is 0.76 mm, thereby saving a length of 1.1 + 0.76 = 1.86 mm.

The laminated glass according to the present invention may be specifically used as a front windshield, where at least a part of the edge of the outer glass pane 1 extends beyond the inner glass pane 3 to form the single-layered glass region. This extension means that the outer glass pane 1 is larger in size than the inner glass pane 3, and the extending part may be the entire circumference or a certain part of the edge. As shown in Figure 1, at least a part of one side edge of the outer glass pane 1 extends beyond the inner glass pane 3 to form the single-layered glass region. The extending part may be the entire side edge of the outer glass pane 1 or a part of the side edge. When the laminated glass according to the present invention is used as a front windshield, the side edge is preferably located at the top edge of the glass, that is, the laser radar is installed on the top edge of the front windshield.

As shown in Figure 1, in the region covered by the optical path of the laser radar, an infrared anti-reflection film 6 may be further provided on the second surface 12 to further improve the transmittance of the infrared band of the 800-2,100 nm for the laser radar. Preferably, the transmittance of the region of the outer glass pane 1 provided with the infrared anti-reflection film 6 in the infrared band of 800-2,100 nm is increased by at least 3%. The infrared anti-reflection film 6 at least completely covers the region covered by the optical path of the laser radar. In some further preferred embodiments, the infrared anti-reflection film 6 completely covers the entire single-layered glass region, but it is not located in the double-layered glass region. The infrared anti-reflection film 6 may be directly formed on the glass surface, or may be applied to a substrate (such as a transparent PET substrate) and then bonded to the glass surface, which is not specifically limited in the present application.

The infrared anti-reflection film 6 comprises at least one stacked structure in which high-refractive-index layers and low-refractive-index layers are alternately arranged in this order; and within the same stacked structure, the refractive index of the high-refractive-index layer for the infrared band of 800-2,100 nm is higher than that of the low-refractive-index layer for the infrared band of 800-2,100 nm. For example, it comprises a first high-refractive-index layer, a first low-refractive-index layer, a second high-refractive-index layer and a second low-refractive-index layer stacked in sequence. The material of the high-refractive-index layer comprises at least one of Si, NbOx (niobium oxide), SiNx (silicon nitride), ZrOx (zirconium oxide), TiOx (titanium oxide), TiNx (titanium nitride), MoOx (molybdenum oxide), TaOx (tantalum oxide) and HfOx (hafnium oxide). The material of the low-refractive-index layer comprises at least one of SiOx (silicon oxide), MgFx (magnesium fluoride), AlOx (aluminum oxide), WOx (tungsten oxide), YFx (yttrium fluoride) and BaFx (barium fluoride). Under the same conditions, the infrared anti-reflection film 6 enables the transmittance of the region of the outer glass pane provided with the infrared anti-reflection film in the infrared band of 800-2,100 nm to increase by at least 3%.

In some preferred embodiments of the present invention, an infrared reflection film 5 is provided on the second surface 12 of the outer glass pane 1 or the third surface 31 of the inner glass pane 3, and the infrared reflection film does not cover the region covered by the optical path of the laser radar.

In a preferred embodiment, as shown in Figure 1, in the double-layered glass region, an infrared reflection film 5 is provided on the second surface 12 of the outer glass pane 1 to effectively block solar energy from passing through the laminated glass, achieving thermal insulation and avoiding reflection of the infrared band of 800-2,100 nm for the laser radar by the metal film layer. The infrared reflection film 5 has an effect of reflecting light in the infrared band of 780-2,500 nm. The transmittance of the region of the laminated glass provided with the infrared reflection film 5 in the infrared band of 780-2,500 nm is less than or equal to 45%.

The infrared reflection film 5 comprises at least one of a metal layer, a metal alloy layer, and a metal oxide layer. The material of the metal layer is at least one selected from gold (Au), silver (Ag), copper (Cu), aluminum (Al) and molybdenum (Mo). The material of the metal alloy layer is at least one selected from silver alloys. The silver alloy layer contains metallic silver and a first doped metal element which is at least one selected from copper (Cu), gold (Au), palladium (Pd), tin (Sn), zinc (Zn), lead (Pb) and nickel (Ni) elements. The material of the metal oxide layer is at least one selected from indium tin oxide, fluorine-doped tin dioxide, aluminum-doped tin dioxide, gallium-doped tin dioxide, boron-doped tin dioxide, tin zinc oxide and antimony-doped tin oxide. For example, when the infrared reflection film 5 comprises a silver layer or a silver alloy layer, the silver layer or the silver alloy layer is located between at least two dielectric layers, and the dielectric layers contain at least one of zinc oxide, tin oxide, indium oxide, titanium oxide, silicon oxide, aluminum oxide, silicon nitride, silicon carbide, aluminum nitride and titanium metal.

In a preferred embodiment of the present invention, the double-layered glass region of the laminated glass further comprises an electrical connection element, which is electrically connected to the infrared reflection film 5 and is used to allow the infrared reflection film 5 to generate heat when energized, thereby achieving a defrosting and defogging function. More preferably, the distance between the outer edge of the electrical connection element and the outer edge of the inner glass pane 3 is in the range of 0 to 30 mm.

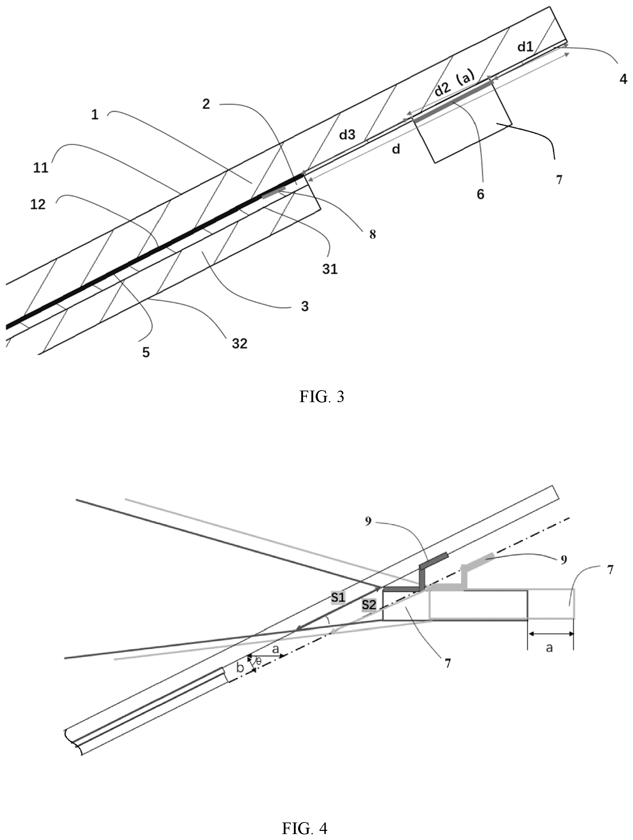

The electrical connection elements may be symmetrically provided on the left and the right sides of the glass, or on the upper and the lower sides of the glass. Taking the bus bar provided on the upper and the lower sides of the glass as an example, the infrared reflection film 5 is provided on the second surface 12 of the outer glass pane 1 or the third surface 31 of the inner glass pane 3. As shown in Figure 3, when provided on the second surface 12 of the outer glass pane 1, the bus bar may cover the edge of the infrared reflection film 5 and form an electrical connection with the infrared reflection film 5, and the bus bar could be shielded by ink. The position of the top edge bus bar 8 is preferably (10+d) mm away from the top edge of the outer glass pane 1, and the position of the bottom edge bus bar is preferably 10 mm away from the bottom edge of the outer glass pane 1. When the bus bar is on the third surface 31 of the inner glass pane 3, the bus bar may be positioned to cover the edge of the infrared reflection film 5 and form an electrical connection with the infrared reflection film 5, and the bus bar could be shielded by ink. Each of the positions of the top edge bus bar and the bottom edge bus bar is preferably 10 mm away from the edges of the inner glass pane.

In the single-layered glass region, as shown in Figure 1 and Figure 2, a first masking layer 41 is provided on the second surface 12 of the outer glass pane 1. The first masking layer 41 covers at least the transition part between the single-layered glass region and the double-layered glass region, and the first masking layer 41 does not cover the region a covered by the optical path of the laser radar. The first masking layer 41 keeps away from the region covered by the optical path of the laser radar, so it can ensure that the infrared band of 800-2,100 nm of the laser radar only needs to pass through the single-layered outer glass pane 1 in this region.

As shown in Figure 2, more preferably, a second masking layer 42 is provided on the third surface 31 or the fourth surface 32 of the inner glass pane 3. The second masking layer 42 is generally provided in a full circumference configuration, though this may vary based on specific requirements. The masking layers are used to shield circuits, connecting accessories and the like at the edge of the laminated glass, for improving the appearance, protecting interior components and enhancing localized adhesion.

The material of the first masking layer 41 or the second masking layer 42 is ceramic ink or UV ink, with a visible light transmittance ≤ 1.5% and an ultraviolet transmittance ≤ 0.05%.

In the single-layered glass region, as shown in Figure 1, in the direction from the edge of the outer glass pane 1 to the edge of the inner glass pane 3: the distance from the edge of the outer glass pane 1 to the edge of the inner glass pane 3 is d; the distance from the edge of the outer glass pane 1 to the outer edge of the optical path of the laser radar is d1; the distance from the outer edge to the inner edge of the region a covered by the optical path of the laser radar is d2; and the distance from the inner edge of the region a covered by the optical path of the laser radar to the edge of the inner glass pane 3 is d3. Preferably, d1 is 10-150 mm, d2 is 30-180 mm, d3 is 0-50 mm, and d = d1 + d2 + d3.

When d3 is 0, the light-transmitting functional region is adjacent to the edge of the inner glass pane 3. When d3 is not 0, the light-transmitting functional region is not in contact with the edge of the inner glass pane 3, which is more preferable.

In the present invention, the laminated glass is applied to a vehicle and is used for installing a laser radar. The horizontal length saving amount of the laser radar installed in the single-layered glass region is a, and a = b/cosθ, wherein b = total thickness of the laminated glass - thickness of the outer glass pane, and θ = 90° - installation angle of the laminated glass. Moreover, preferably, the area where the optical path of the laser radar intersects with the single-layered glass region is S1; if the laser radar is installed in the double-layered glass region, the area where the optical path of the laser radar intersects with the double-layered glass region is S2, and S1 < S2.

As shown in Figure 4, the light-colored part on the right indicates the position where the laser radar 7 with a conventional structure is installed (in this example, it is installed by using a bracket 9 to fix), and the dark-colored part on the left indicates the position where the laser radar 7 according to the present invention is installed. It can be seen from Figure 4 that, when the total thickness of the laminated glass is reduced by b, the in-vehicle space a can be saved in the X-axis direction of the vehicle coordinate system, cosθ = b/a, and thus a = b/cosθ, wherein b = total thickness of the laminated glass - thickness of the outer glass pane, and θ = (90° - installation angle of the glass). In addition, as can be seen from Figure 4, the installation of the laser radar 7 is generally parallel to the X-axis of the vehicle. Therefore, when the same laser radar (with the same optical path) is translated along the X-axis due to the reduced thickness of the glass, assuming that the intersection area between the optical path of the laser radar at the original position and the glass is S2, the intersection area between the optical path at the new position and the glass is S1, and thus S1 < S2. Accordingly, the area of the radar window on the glass surface can be reduced, thereby reducing the color difference or cost issues caused by the special treatment of this window.

In the laminated glass according to the present invention, both the outer glass pane 1 and the inner glass pane 3 are subjected to hot bending molding treatment at 500°C or higher.

The outer glass pane 1 is a transparent glass with a transmittance of 75-85% in the infrared band of 800-2,100 nm, or an ultra-clear glass with a transmittance of 85-95% in the infrared band of 800-2,100 nm; more preferably, the outer glass pane is an ultra-clear glass with a transmittance of 85-95% in the infrared band of 800-2,100 nm.

The inner glass pane 3 is selected from a transparent glass with a visible light transmittance of 85-93%, a green glass with a visible light transmittance of 73-88%, and a solar green glass with a visible light transmittance of 70-85.5%.

The thickness of the outer glass pane 1 is 3.2-5.0 mm, and the thickness of the inner glass pane 3 is 0.5-1.8 mm. For the outer glass pane 1, plating an infrared reflection layer can somewhat weaken the glass surface, thereby enabling the laminated glass to meet the requirements for the front windshield glass in terms of pedestrian collision.

The inner glass pane 3 is tempered glass or non-tempered glass. When the inner glass pane 3 is non-tempered glass, the thickness of the inner glass pane 3 is 1.6-1.8 mm. When the inner glass pane 3 is tempered glass subjected to special chemical treatment, the thickness of the inner glass pane 3 is 0.5-1.5 mm, more preferably 0.5-1.3 mm, and further preferably 1.1 mm.

Since the inner glass pane 3 is thinned, under the same process conditions (semi-tempering, thermal strengthening, and the like), in order to ensure the rigidity of the entire laminated glass assembly, the thickness of the outer glass pane 1 is preferably greater than that of the inner glass pane 3 according to the present invention. Preferably, the thickness of the outer glass pane 1 is 3.2-5.0 mm, such as 3.2 mm, 3.5 mm, 4.0 mm, 4.5 mm or 5.0 mm, more preferably 3.2-4.0 mm, such as 3.2 mm, 3.5 mm or 4.0 mm, and further preferably 3.5 mm.

In addition, in order to ensure that the rigidity of the entire laminated glass assembly is equivalent to that of a single piece of tempered glass, the thickness of the outer glass pane 1 is preferably consistent with that of a single piece of tempered glass according to the present invention. For example, as shown in Figure 5, by configuring a reasonable glass assembly, the present invention enables the laminated glass assembly consisting of a 3.5 mm outer glass pane 1, a 1.1 mm inner glass pane 3 and a 0.76 mm intermediate layer (L=3.5+1.1+0.76 in Figure 5) to have a strength equivalent to that of a 3.5 mm single piece of tempered glass (T=3.5 in Figure 5), which is superior to that of a conventional laminated glass assembly consisting of a 2.6 mm outer glass pane 1, a 2.6 mm inner glass pane 3 and a 0.76 mm intermediate layer (L=2.6+2.6+0.76 in Figure 5) and that of a conventional laminated glass assembly consisting of a 2.1 mm outer glass pane 1, a 2.1 mm inner glass pane 3 and a 0.76 mm intermediate layer (L=2.1+2.1+0.76 in Figure 5).

As shown in Figure 1, the thermoplastic intermediate layer 2 is interposed between the outer glass pane 1 and the inner glass pane 3 in the double-layered glass region, and it is used for bonding the second surface 12 and the third surface 31 of this part. The thermoplastic intermediate layer 2 is not provided in the single-layered glass region.

The thermoplastic intermediate layer 2 may be a single layer or two or more layers. The thermoplastic intermediate layer 2 may also have other functions. For example, the thermoplastic intermediate layer 2 may also comprise at least two layers, one of which has a higher plasticizer content to provide sound insulation, or one of which is wedge-shaped so as to enable a head-up display (HUD) and the like.

The thickness of the thermoplastic intermediate layer 2 is 0.3-2.3 mm, such as 0.38 mm, 0.51 mm, 0.76 mm, 1.9 mm (three layers, with thicknesses of 0.76 mm, 0.38 mm and 0.76 mm respectively) or 1.52 mm (three layers, with thicknesses of 0.76 mm, 0.38 mm and 0.38 mm respectively), more preferably 0.38 mm or 0.76 mm, and further preferably 0.76 mm.

The material of the thermoplastic intermediate layer 2 is selected from polycarbonate (PC), polyvinyl chloride (PVC), polyvinyl butyral (PVB), ethylene vinyl acetate (EVA), polyacrylate (PA), polymethyl methacrylate (PMMA), polyurethane (PUR), ionomer film (SGP), and the like, more preferably polyvinyl butyral (PVB) with a visible light transmittance of > 70%. Although thermoplastic intermediate layers 2 of different materials exhibit varying absorption rates for the infrared band of 800-2,100 nm, the present invention, in which the outer glass pane 1 and the inner glass pane 3 adopt a staggered structure and no thermoplastic intermediate layer 2 is incorporated in the single-layered glass region, can avoid the absorption of the infrared band of 800-2,100 nm by the thermoplastic intermediate layer 2.

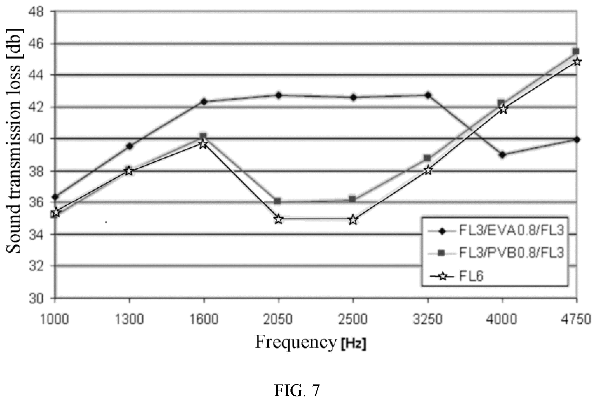

The thermoplastic intermediate layer 2 is preferably a special material with rigidity functionality. In some embodiments, the thermoplastic intermediate layer 2 may also be modified EVA with high strength and high sound insulation performance. The content of vinyl acetate (VA) in the modified EVA is 5-40%. The linear ethylene-vinyl acetate copolymer is crosslinked by a crosslinking agent to form a network structure, thereby obtaining the modified EVA with significantly improved strength performance, high-temperature creep resistance, water resistance, sound insulation, and the like. As can be seen from Figure 6, the modified EVA film sheet exhibits adhesion 3 to 4 times greater than that of the standard PVB film sheets. As can be seen from Figure 7, the modified EVA film sheet has sound insulation performance superior to the standard PVB film sheets. Particularly, within the sound frequency range of 1600 Hz to 3250 Hz, which is the most sensitive to the human ear, the laminated glass formed by two 3 mm-thick glass panes and one 0.8 mm-thick modified EVA has a sound transmission loss of at least 42 db.

In Figure 7, FL3/EVA0.8/FL3 represents a glass pane, a modified EVA and a glass pane stacked in sequence, wherein FL3 represents a glass pane with a thickness of 3 mm, and EVA0.8 represents a modified EVA with a thickness of 0.8 mm. FL3/PVB0.8/FL3 represents a glass pane, a standard PVB and a glass pane stacked in sequence, wherein FL3 represents a glass pane with a thickness of 3 mm, and PVB0.8 represents a standard PVB with a thickness of 0.8 mm. FL6 represents a glass pane with a thickness of 6 mm.

The laminated glass according to the present invention is designed with a staggered structure, where at least a part of the edge of the outer glass pane 1 extends beyond the inner glass pane 3 to form a single-layered glass region, and a laser radar is installed on the inner side of the single-layered glass region. The single-layered glass region is not provided with thermoplastic intermediate layer 2, so the optical path of the laser radar only needs to pass through one layer of the outer glass pane 1, resulting in a higher transmittance than passing through conventional double-layered glass. In addition, the absorption of the infrared band of 800-2,100 nm for the laser radar by the thermoplastic intermediate layer 2 can be avoided, enabling the laser radar to capture more point clouds. Moreover, the staggered structure can also provide an in-vehicle space for internal installation of the laser radar within the windshield. The arrangement of the infrared anti-reflection film 6 in the region covered by the optical path of the laser radar can further improve the transmittance of the infrared band of 800-2,100 nm for the laser radar. An infrared reflection film 5 may be further provided in the double-layered glass region, which may not only provide thermal insulation, but also avoid reflection of the infrared band of 800-2,100 nm for the laser radar. Further, the present invention addresses the strength of the laminated glass assembly by optimizing the thickness combination of the outer glass pane 1 and the inner glass pane 3. For the thermoplastic intermediate layer 2, a specialized material with rigid functionality is preferred to further enhance rigidity, sound insulation and other properties.

Obviously, the above embodiments of the present invention are only examples for the purpose of clearly illustrating the present invention, and are not intended to be a limitation of the embodiments of the present invention. For the person of ordinary skilled in the art, other different forms of changes or variations can be made on the basis of the above description. It is not possible herein to exhaust all the embodiments, and any obvious changes or variations that are derived from the technical solutions of the present invention are still within the protection scope of the present invention.

## Claims

1. A laminated glass allowing for internal installation of a laser radar, wherein the laminated glass comprises an outer glass pane, a thermoplastic intermediate layer, and an inner glass pane;
the outer glass pane has a first surface and a second surface opposite to each other; the inner glass pane has a third surface and a fourth surface opposite to each other;
at least a part of the edge of the outer glass pane extends beyond the inner glass pane, wherein the extending part forms a single-layered glass region, and the overlapping part corresponds to a double-layered glass region;
the thermoplastic intermediate layer is interposed between the outer glass pane and the inner glass pane in the double-layered glass region, for bonding the second surface and the third surface;
the laser radar is installed on the second surface of the outer glass pane in the single-layered glass region; and
the transmittance of the outer glass pane in the infrared band of 800-2,100 nm is 75% to 95%.

2. The laminated glass according to Claim 1, wherein an infrared anti-reflection film is provided on the second surface in the area covered by the optical path of the laser radar.

3. The laminated glass according to Claim 2, wherein the transmittance of the area of the outer glass pane provided with the infrared anti-reflection film in the infrared band of 800-2,100 nm is increased by at least 3%.

4. The laminated glass according to Claim 2, wherein the infrared anti-reflection film comprises at least one stacked structure in which high-refractive-index layers and low-refractive-index layers are alternately arranged in this order; and within the same stacked structure, the refractive index of the high-refractive-index layer for the infrared band of 800-2,100 nm is higher than that of the low-refractive-index layer for the infrared band of 800-2,100 nm.

5. The laminated glass according to Claim 1, wherein an infrared reflection film is provided on the second surface of the outer glass pane or the third surface of the inner glass pane, and the infrared reflection film does not cover the area covered by the optical path of the laser radar.

6. The laminated glass according to Claim 5, wherein the infrared reflection film is located in the double-layered glass region.

7. The laminated glass according to Claim 5, wherein the infrared reflection film has an effect of reflecting light in the infrared band of 780-2,500 nm, and the transmittance of the area of the laminated glass provided with the infrared reflection film in the infrared band of 780-2,500 nm is less than or equal to 45%.

8. The laminated glass according to Claim 5, wherein the infrared reflection film comprises at least one of a metal layer, a metal alloy layer, and a metal oxide layer;
the material of the metal layer is at least one selected from gold, silver, copper, aluminum, and molybdenum;
the material of the metal alloy layer is at least one selected from silver alloys;
the material of the metal oxide layer is at least one selected from indium tin oxide, fluorine-doped tin dioxide, aluminum-doped tin dioxide, gallium-doped tin dioxide, boron-doped tin dioxide, tin zinc oxide, and antimony-doped tin oxide.

9. The laminated glass according to Claim 5, wherein the double-layered glass region of the laminated glass further comprises an electrical connection element, which is electrically connected to the infrared reflection film and is used to allow the infrared reflection film to generate heat when energized.

10. The laminated glass according to Claim 9, wherein the distance between the outer edge of the electrical connection element and the outer edge of the inner glass pane is in the range of 0 to 30 mm.

11. The laminated glass according to Claim 1, wherein in the single-layered glass region and in the direction from the edge of the outer glass pane to the edge of the inner glass pane, the distance from the edge of the outer glass pane to the edge of the inner glass pane is d; the distance from the edge of the outer glass pane to the outer edge of the area covered by the optical path of the laser radar is d1; the distance from the outer edge to the inner edge of the area covered by the optical path of the laser radar is d2; and the distance from the inner edge of the area covered by the optical path of the laser radar to the edge of the inner glass pane is d3; wherein d1 is 10-150 mm, d2 is 30-180 mm, d3 is 0-50 mm, and d = d1 + d2 + d3.

12. The laminated glass according to Claim 1, wherein the horizontal length saving amount of the laser radar installed in the single-layered glass region is a, and a = b/cosθ, wherein b = total thickness of the laminated glass - thickness of the outer glass pane, and θ = 90° - installation angle of the laminated glass.

13. The laminated glass according to Claim 1, wherein the area where the optical path of the laser radar intersects with the single-layered glass region is S1; if the laser radar is installed in the double-layered glass region, the area where the optical path of the laser radar intersects with the double-layered glass region is S2, and S1 < S2.

14. The laminated glass according to Claim 1, wherein a first masking layer is provided on the second surface of the outer glass pane, and
the first masking layer covers at least the transition part between the single-layered glass region and the double-layered glass region, and does not cover the area covered by the optical path of the laser radar.

15. The laminated glass according to Claim 1, wherein a second masking layer is provided on the third surface or the fourth surface of the inner glass pane.

16. The laminated glass according to Claims 14 or 15, wherein the material of the first or the second masking layer is ceramic ink or UV ink; and
the visible light transmittance of the first masking layer or the second masking layer is ≤ 1.5%, and the UV transmittance thereof is ≤ 0.05%.

17. The laminated glass according to Claim 1, wherein the outer glass pane is a transparent glass with a transmittance of 75-85% in the infrared band of 800-2,100 nm, or an ultra-clear glass with a transmittance of 85-95% in the infrared band of 800-2,100 nm.

18. The laminated glass according to Claim 1, wherein the thickness of the outer glass pane is 3.2-5.0 mm, and the thickness of the inner glass pane is 0.5-1.8 mm.

19. The laminated glass according to Claim 14, wherein the inner glass pane is tempered glass or non-tempered glass;
when the inner glass pane is non-tempered glass, the thickness of the inner glass pane is 1.6-1.8 mm; and when the inner glass pane is tempered glass, the thickness of the inner glass pane is 0.5-1.5 mm.

20. The laminated glass according to Claim 1, wherein the thickness of the thermoplastic intermediate layer is 0.3-2.3 mm.

21. A vehicle comprising the laminated glass according to any one of Claims 1-20 and a laser radar installed on the laminated glass.
